# DEMANDE DE BREVET EUROPEEN

(11) **EP 0 833 093 A1**
(43) Date de publication de la demande: **01.04.1998**
(21) Numéro de dépôt: 97420173.3
(22) Date de dépôt: 23.09.1997
(51) Int. Cl.: F16L 37/04, F16L 37/084

(54) **Dispositif de raccordement étanche de deux tubes mEtalliques bout à bout**

(30) Priorité: 27.09.1996 FR 9612035
(71) Demandeur: TUBEST, F-02130 Fere en Tardenois (FR)
(72) Inventeur: LE FOLL, Marcel, 02200 Pasly (FR)
(74) Mandataire: Perrier, Jean-Pierre

(57) **Abrégé**

Dans ce dispositif, l'élément supérieur (A) comporte, en vis à vis de l'élément inférieur B, en allant vers l'extérieur et à partir d'une partie cylindrique, une nervure tronconique (11) divergeant vers le haut et une rainure circulaire (4) entourant ladite nervure, ladite rainure (4) ayant une section transversale dégageante et une jupe externe (10) déformable élastiquement, tandis que l'élément inférieur (B) comporte, en vis à vis de l'élément supérieur, en allant vers l'extérieur et à partir d'une partie cylindrique (3, 16b), d'une part, une cuvette tronconique (6), allant en s'évasant vers le haut et apte à recevoir la nervure (11) de l'élément supérieur, d'autre part, une jupe externe tronconique (7) divergeant vers le bas, et formant avec la paroi de la cuvette (6), une nervure circulaire (5), apte à pénétrer dans la rainure (4) de l'élément supérieur (A) et à venir élastiquement en contact contre la face interne de cette rainure, et de plus, des moyens de retenue (12) ménagés sur le bord inférieur de la jupe externe (10) et aptes à s'encliqueter sous le bord de la jupe externe (7) de l'élément inférieur (B).

## Description

L'invention est relative à un dispositif de raccordement étanche et bout à bout de deux tubes en un matériau présentant une capacité à se déformer élastiquement.

L'invention s'applique aux conduits d'évacuation des fumées de combustion provenant des chaudières, ou aux conduits de ventilation, et de manière générale à tous conduits et tuyaux, pour l'évacuation de fumées, ou de gaz, pouvant être aussi parcourus par des condensats.

Actuellement, le raccordement de ce type de tuyaux est assuré :
- pour les tuyaux flexibles par des manchons mâle-femelle, la partie femelle recevant le tuyau de niveau supérieur et la partie mâle s'engageant dans le tuyau de niveau inférieur, et ce afin d'assurer l'écoulement des condensats à l'intérieur du tuyau.

L'étanchéité de ce type d'assemblage est très imparfaite et la fixation des tuyaux et du flexible est assurée par vis et/ou colliers.
- pour les tuyaux rigides simples, le raccordement est assuré par l'emboîtement d'une forme mâle dans un embout femelle formé par l'extrémité du tuyau situé en position inférieure. La fixation est assurée par un collier. Un joint peut améliorer l'étanchéité du système.
- pour les tuyaux rigides à double paroi, avec isolant intermédiaire, l'assemblage est assuré par les formes aménagées aux extrémités, souvent cylindriques ou coniques. Un collier permet d'appliquer les deux tuyaux l'un contre l'autre.

Cette opération de raccordement nécessite de la main d'oeuvre et des accessoires et est donc onéreuse. De plus, en raison du recours à des colliers, dont le serrage est difficilement vérifiable, l'étanchéité est incertaine.

A cela, il faut ajouter que pour les tubes disposés non horizontalement, ce qui est bien souvent le cas pour évacuer les condensats, la gravité tend à faire glisser les éléments assemblés et que, si les colliers sont mal serrés, ce glissement peut contribuer à diminuer l'étanchéité de la jonction.

La présente invention a pour objet de fournir un dispositif de raccordement ne nécessitant aucun outil ou accessoire, procurant une jonction rapide, étanche et non altérable par l'action de la gravité.

Ce dispositif est du type de ceux composés de deux éléments complémentaires, respectivement supérieur et inférieur par rapport au sens d'écoulement des condensats.

Selon l'invention, l'élément supérieur comporte, en vis à vis de l'élément inférieur, en allant vers l'extérieur et à partir d'une partie cylindrique, une nervure tronconique divergeant vers le haut et entourée par une rainure circulaire, ladite rainure ayant une section transversale dégageante et une jupe externe déformable élastiquement, tandis que l'élément inférieur comporte, en vis à vis de l'élément supérieur, en allant vers l'extérieur et à partir d'une partie cylindrique, d'une part une cuvette tronconique allant en s'évasant vers le haut et apte à recevoir la nervure de l'élément supérieur, d'autre part, une jupe externe tronconique divergeant vers le bas et formant, avec la paroi de la cuvette, une nervure circulaire apte à pénétrer dans la rainure de l'élément supérieure et à venir élastiquement en contact contre les faces internes de cette rainure et, de plus, des moyens de retenue ménagés sur le bord inférieur de la jupe externe et aptes à s'encliqueter sous le bord de la jupe externe de l'élément inférieur.

Pour raccorder deux tubes avec ce dispositif, il suffit de les disposer dans le prolongement l'un de l'autre et de manière que la nervure circulaire de l'élément inférieur soit en vis-à-vis de la rainure de l'élément supérieur, puis de rapprocher ces deux tubes de façon que la nervure écarte élastiquement la jupe externe de la rainure puis vienne en contact d'étanchéité avec les faces internes des parois de cette rainure, jusqu'à l'encliquetage des moyens ménagés sur la jupe de la rainure.

Lorsque ce dispositif de raccordement est disposé normalement, c'est à dire de manière que la nervure de l'élément inférieur fasse saillie vers le haut, l'action de la gravité s'exerçant sur le tube supérieur améliore le pincement de la nervure par la rainure et est sans effet sur le tronçon inférieur, puisque la nervure est calée dans la rainure par les moyens de retenue.

Avantageusement, les moyens de retenue sont constitués par un retour coudé ménagé sur l'extrémité de la jupe externe de la rainure de l'élément supérieur, ce retour s'étendant sensiblement dans le plan diamétral de l'élément supérieur et constituant, lors du raccordement, organe d'écartement de cette jupe.

Selon les formes d'exécution, les éléments du dispositif sont monolithiques avec les tronçons du tube qui les portent et, en conséquence, sont formés aux extrémités de ces tronçons, ou sont rapportés et fixés sur ces tronçons.

La combinaison de ces deux formes d'exécution permet dans une installation comprenant des tubes ou tuyaux de même diamètres mais de types différents, et par exemple, flexibles, rigides à simple paroi, rigides à double paroi isolante, et voire même concentriques, de les raccorder par le même dispositif avec des éléments de raccordement, soit formés aux extrémités des tubes, soit rapportés et fixés sur eux par soudage, rivetage, et voire même vissage, par exemple en utilisant les spires hélicoïdales des tronçons de tuyaux onduleux flexibles.

Dans une forme d'exécution, l'extrémité inférieure de la jupe de l'élément inférieur est muni d'un retour coudé dirigé vers l'intérieur et prolongé vers le bas par une gouttière concave débouchant vers l'extérieur, cette gouttière étant apte à recevoir un organe circulaire de désencliquetage et étant divisée en plusieurs tronçons par des fentes s'étendant dans la jupe.

Ainsi pour désassembler les éléments de raccordement, il suffit d'introduire dans la gouttière un jonc circulaire, ou un fil résistant, et de resserrer ce jonc, ou fil, dans la gouttière pour réduire temporairement le diamètre externe de la jupe externe de l'élément inférieur, et permettre l'extraction de la nervure de l'élément inférieur hors de la rainure de l'élément supérieur.

D'autres caractéristiques et avantages ressortiront de la description qui suit en référence au dessin schématique annexé représentant plusieurs formes d'exécution de ce dispositif de raccordement.
Figures 1 et 2 sont des vues partielles en coupe transversale montrant une première forme d'exécution des éléments de raccordement formés, respectivement, à l'extrémité inférieure et à l'extrémité supérieure de deux tubes à raccorder,
Figures 3 et 4 sont des vues partielles montrant les extrémités des deux tubes, respectivement, lors du raccordement et en fin de raccordement,
Figure 5 et 6 sont des vues partielles en coupe montrant des variantes de réalisation de ce dispositif de raccordement,
Figure 7 est une vue partielle en coupe transversale montrant les extrémités de deux tubes équipés d'éléments de raccordement rapportés.
Figure 8 est une vue de face en élévation d'une autre forme d'exécution de l'élément inférieur,
Figure 9 et 10 sont des vues partielles en coupe de chacun des éléments de figure 8 montrant à échelle agrandie les différences d'angulation respectivement de la rainure et de la nervure,
Figure 11 est une vue partielle en coupe de l'assemblage de deux éléments de figures 9 et 10.

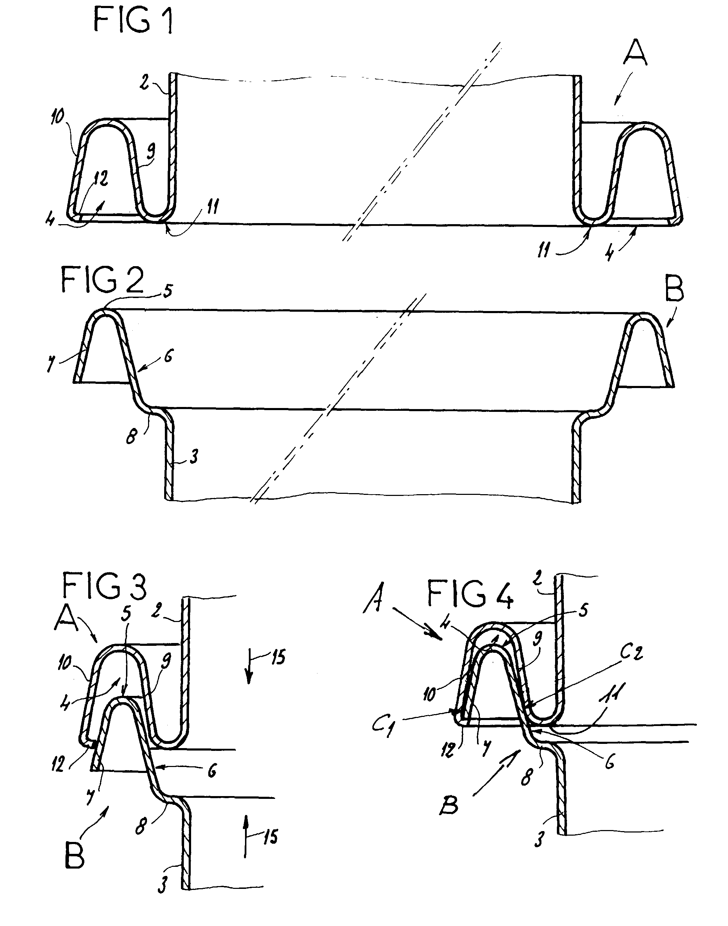

Le dispositif de raccordement est essentiellement composé d'un élément supérieur A et d'un élément inférieur B. Dans la forme d'exécution des figures 1 à 6, ces deux éléments sont formés aux extrémités respectivement, inférieure et supérieure, de deux tubes métalliques 2 et 3 dont il faut assurer le raccordement et disposés, sensiblement, en position supérieure et en position inférieure et dans l'alignement l'un de l'autre.

De manière générale, l'élément supérieur A, montré figure 2, comprend une rainure 4 tournée vers le bas ayant une section transversale dégageante, et par exemple triangulaire à sommet arrondi, et l'élément inférieur B comprend une nervure 5 saillant vers le haut et apte à être coiffée par la rainure 4.

Dans la forme d'exécution représentée aux figures 1 à 5, la nervure 5 de l'élément inférieur B est formée, en allant de l'intérieur vers l'extérieur, par la paroi d'une cuvette tronconique 6 et par une jupe externe 7, également tronconique et entourant la paroi de la cuvette à laquelle elle est liée par un arrondi. Cette nervure présente donc en section transversale, une forme triangulaire à sommet arrondi. Cette nervure est reliée au corps du tube 3 par un retour 8, coudé et contrecoudé.

La rainure 4 de l'élément supérieur A est formée, d'une part, par un retour tronconique 9, rabattu autour de l'extrémité du tube 2 avec laquelle il forme une nervure tronconique 11, et, d'autre part, par une jupe externe tronconique 10 s'évasant vers le bas. Le retour 9 et la jupe 10 se raccordent par un arrondi. Cette rainure 4 présente donc une section transversale triangulaire à fond arrondi.

Selon les applications et les matériaux, les deux pentes de chacune des formes coniques peuvent être identiques ou non, et présenter des cônes symétriques ou dissymétriques. De même, l'angle formé par les deux parois de la rainure 4 peut avoir la même valeur que celui formé par les parois de la nervure 5 ou avoir une valeur supérieure ou inférieure. A la figure 4, il a une valeur inférieure, de manière à limiter la surface de contact et obtenir, sur une zone de contact localisée, un effort de serrage élastique plus important, favorable à l'obtention d'une meilleure étanchéité.

La jupe externe 10 de la rainure 4 est munie, à son extrémité libre, d'un moyen de retenue constitué, dans cette forme d'exécution, par un retour 12, coudé vers l'intérieur et disposé sensiblement parallèlement à un plan diamétral de l'élément supérieur de raccordement.

Pour raccorder bout à bout les tubes 2 et 3, il suffit de les rapprocher l'un de l'autre, comme représenté par les flèches 15 à la figure 3. Durant ce rapprochement le retour coudé 12 de la rainure 4 vient en contact avec la jupe externe 7 de la nervure 5 ce qui provoque, d'une part, l'écartement élastique de la jupe 10 vers l'extérieur et, d'autre part, le déplacement de la jupe 7 de la nervure vers l'axe des tubes. Ce déplacement est limité par la capacité de déformation de cette jupe, mais aussi par le contact de la face interne de la cuvette 6 sur la face externe du retour 9 de la rainure 11 de l'élément supérieur A. Il apparaît ainsi que, lors de cet engagement, la cuvette 6 et la nervure 11 coopèrent pour assurer le centrage axial des deux éléments A et B.

A la fin de l'engagement, le retour coudé 12 parvient au niveau du bord inférieur de la jupe 7 et, grâce à l'élasticité de la jupe 10 le portant, s'encliquète sous ce bord en permettant aux faces internes de la rainure 4 de venir en contact avec les faces externes de la nervure 5, comme représenté en C1 et C2 à la figure 4.

A la fin de cette opération, qui s'effectue très aisément et très rapidement, les deux tubes 2 et 3 sont parfaitement liés l'un à l'autre, aussi bien en translation transversale, grâce à l'engagement de la nervure 5 dans la rainure 4 qu'en translation longitudinale, dans un sens, par l'appui des portées C1,C2 et, dans l'autre sens, par verrouillage au moyen du rebord 12.

On notera que l'action de la gravité sur le tube supérieur 2 améliore le contact et, en conséquence, l'étanchéité entre les faces en vis-à-vis de la nervure 5 et de la rainure 4.

Par ailleurs, lorsque les éléments A et B respectent le sens de montage représenté, ce dispositif de raccordement est sans influence sur l'écoulement, dans les tuyaux, d'un liquide ou de condensats. Enfin, les contacts C1 et C2 assurent non seulement l'étanchéité, mais aussi la stabilité de l'assemblage, même lorsque les axes longitudinaux des tubes 2 et 3 ne sont pas verticaux.

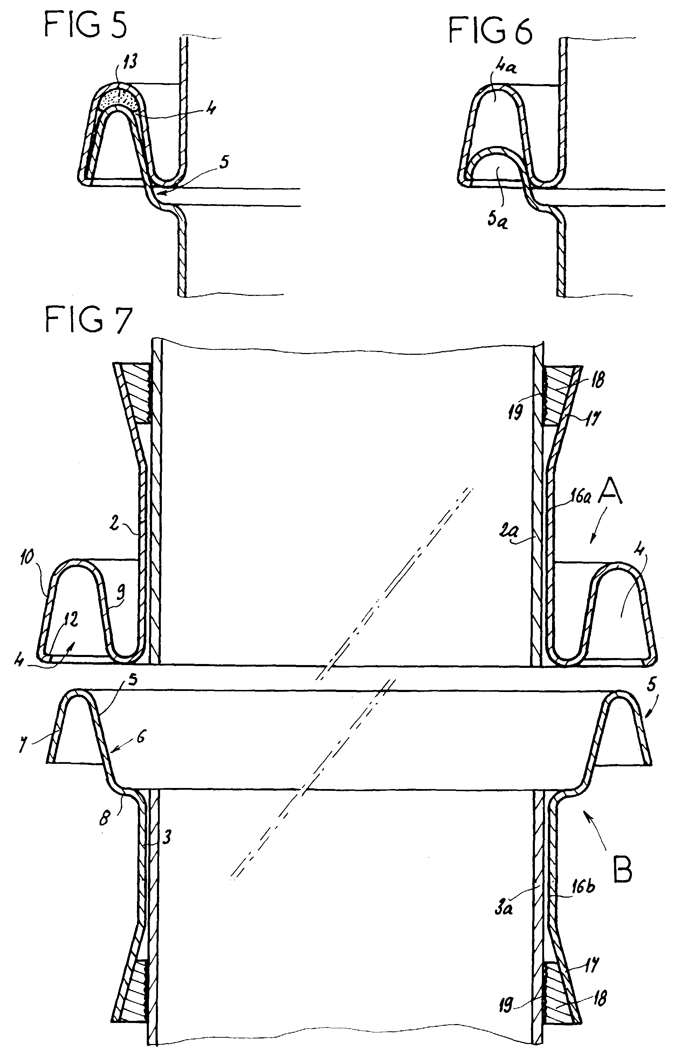

Dans la forme d'exécution représentée à la figure 5 la rainure 4 comporte, dans son fond, un joint compressible 13 complétant l'étanchéité procurée par le contact des faces en vis-à-vis de la rainure 4 et de la nervure 5.

Dans la forme d'exécution représentée à la figure 6 la nervure 5a a une section transversale semi-circulaire et s'engage dans une rainure 4a identique à celle 4 de la forme d'exécution précédente.

Cela met en évidence que l'invention ne se limite pas aux sections transversales des nervures décrites ci-dessus, mais en embrasse toutes les variantes pourvu que la rainure 4 ait une section transversale dégageante, c'est-à-dire permettant le dégagement de la nervure et que sa jupe 10 soit dotée d'un moyen de retenue s'enclenchant élastiquement sous le bord externe de la nervure.

Les éléments de raccordement A et B sont réalisés par formage, soit directement sur les extrémités des tubes devant être raccordées, soit sur les extrémités de corps cylindriques, fixés, par soudure, par rivetage, par un coin, par collage ou vissage, aux extrémités des tubes devant être raccordés. Cette dernière solution vise en particulier les tubes annelés ou ondulés.

La figure 7 montre une forme d'exécution particulière d'un dispositif de raccordement rapportable sur les extrémités cylindriques de tubes 2a, 3a.

Chacun des éléments de raccordement supérieur A ou inférieur B fait corps avec une virole 16a, 16b, dont l'extrémité qui est opposée à celle munie des moyens de raccordement, est conformée en cône divergeant 17. La face interne de ce cône est destinée à servir d'appui à un manchon tronconique 18 qui est monté coulissant sur, et autour, du tube correspondant 2a, 3a. La face interne cylindrique de ce manchon, et éventuellement sa face externe conique, peuvent comporter des stries 19 améliorant l'ancrage après coincement et évitant le décoincement. On notera d'ailleurs que l'action de la gravité s'exerçant sur le tube supérieur 2a, puis par l'élément supérieur A sur l'élément inférieur B, assure l'autocoincement de la liaison entre chaque tube et son élément de raccordement.

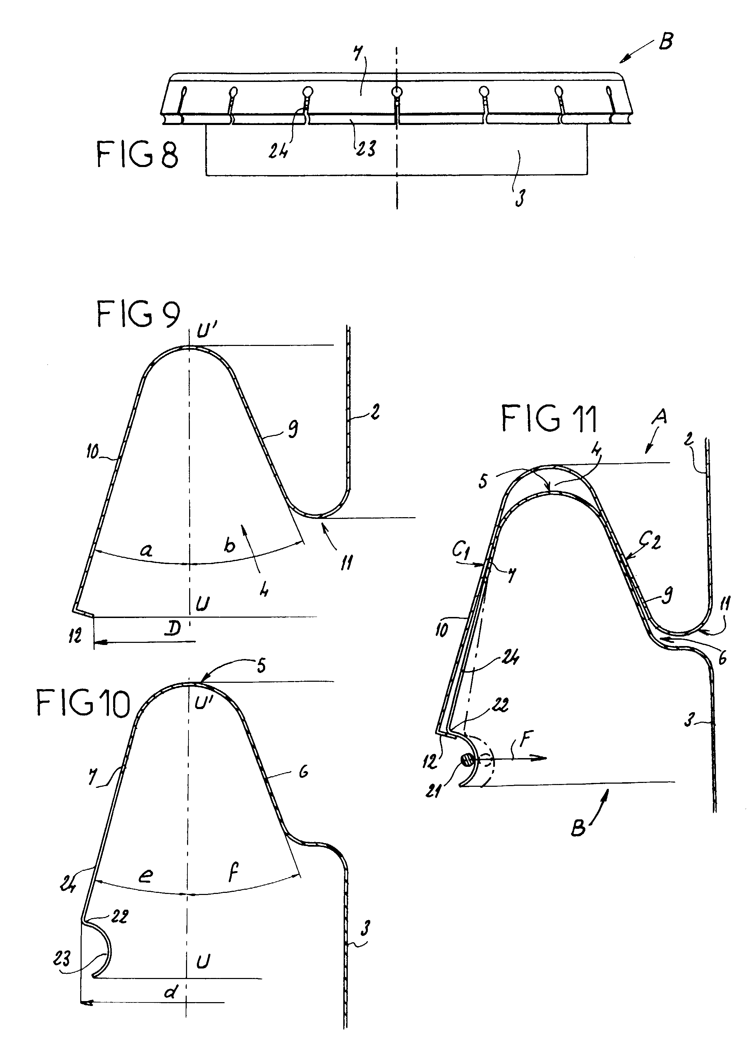

Les figures 8 à 11 représentent une autre forme d'exécution de ce dispositif de raccordement. La jupe 7 de l'élément inférieur B est muni, à son extrémité inférieure, d'un retour coudé 22 tourné vers l'intérieur et prolongé par une gouttière concave 23, par exemple sensiblement semi-circulaire. Cette gouttière est divisée en tronçons par des fentes 24, longitudinales et espacées angulairement, s'étendant dans la jupe 7. La largeur de chaque fente et le nombre de fentes sont déterminées de manière que, lorsque la jupe 7 est serrée radialement par un organe circulaire de désencliquetage 21 introduit dans la gouttière 23, le diamètre extérieur d de la jupe soit inférieur au diamètre D de l'ouverture délimitée, dans l'élément supérieur A, par le retour coudé 12.

Cet aménagement permet donc de désassembler les deux éléments A et B du dispositif en mettant en oeuvre un organe constitué soit par un outil comportant un jonc s'insérant dans la gouttière et permettant d'exercer sur celle-ci des efforts radiaux (F, Figure 11), répartis périphériquement, soit, plus simplement, par un fil en matériau résistant, tel que fil de fer ou fil de pêche de forte section, disposé dans la gouttière et dont la rotation des extrémités provoque le serrage radial de cette gouttière.

Après démontage des deux éléments A et B, l'organe de désencliquetage est retiré afin que, par élasticité, les portions de gouttière et la jupe reprennent leur position de départ, en prévision d'un prochain assemblage.

Les figures 9 et 10, relatives à une forme d'exécution procurant un bon assemblage, montrent les différents angles des parois tronconiques par rapport à un axe U'U parallèle à l'axe longitudinal des éléments A et B. Ainsi, pour l'élément supérieur A l'angle a de la jupe 10 par rapport à cet axe U'U a une valeur de l'ordre de 17° et est inférieur à la valeur de l'angle b, de l'ordre de 27°, formé entre cet axe et le retour 9.

Dans l'élément inférieur B, l'angle e, de la jupe 7 par rapport à l'axe U'U, a une valeur qui est inférieure à celle de l'angle a, qui lui correspond dans l'élément supérieur, et qui, par exemple, est de l'ordre de 15°. Quant à l'angle f de la cuvette 6, il a une valeur qui est inférieure à la valeur de l'angle b, lui correspondant, et qui est de l'ordre de 26°.

Grâce à cela, lorsque les deux éléments A et B sont assemblés, le contact des parois de la nervure 5 contre celles de la rainure 4 s'effectue en C1 et C2 comme montré figure 11.

Le dispositif de raccordement selon l'invention est applicable à tout tube métallique réalisé dans un métal fournissant une certaine élasticité, tels que l'acier, ou l'acier inoxydable, mais aussi dans certains matériaux synthétiques moulables.

Il ressort de ce qui précède que le dispositif de raccordement selon l'invention permet de supprimer les traditionnels raccordements par collier, et les frais de fourniture et d'installation inhérents à ceux-ci, tout en offrant un raccordement fiable.

Ce dispositif peut être utilisé sur des tuyaux rigides ou sur des tuyaux flexibles assurant l'évacuation des fumées, de la sortie de chaudière jusqu'à l'extérieur du bâtiment, mais aussi sur les conduits à double paroi non isolées, appelés ventouses, et sur les conduits à double parois isolées.

## Revendications

1. Dispositif de raccordement étanche de deux tubes non horizontaux disposés bout à bout, composé de deux éléments complémentaires, respectivement supérieur (A) et inférieur (B), par rapport au sens d'écoulement des condensats, **caractérisé en ce que** l'élément supérieur (A) comporte, en vis à vis de l'élément inférieur, en allant vers l'extérieur et à partir d'une partie cylindrique (2, 16a), une nervure tronconique (11) divergeant vers le haut et une rainure circulaire (4) entourant ladite nervure, ladite rainure (4) ayant une section transversale dégageante et une jupe externe (10) déformable élastiquement, tandis que l'élément inférieur (B) comporte, en vis à vis de l'élément supérieur, en allant vers l'extérieur et à partir d'une partie cylindrique (3, 16b), d'une part, une cuvette tronconique (6), allant en s'évasant vers le haut et apte à recevoir la nervure (11) de l'élément supérieur, d'autre part, une jupe externe tronconique (7) divergeant vers le bas, et formant, avec la paroi de la cuvette (6), une nervure circulaire (5), apte à pénétrer dans la rainure (4) de l'élément supérieur (A) et à venir élastiquement en contact contre la face interne de cette rainure, et de plus, des moyens de retenue (12) ménagés sur le bord inférieur de la jupe externe (10) et aptes à s'encliqueter sous le bord de la jupe externe (7) de l'élément inférieur (B).

2. Dispositif selon la revendication 1, **caractérisé en ce que** la rainure circulaire (4) de l'élément supérieur (A) et la nervure (5) de l'élément inférieur (B) ont, en section transversale, une forme triangulaire à sommet arrondi.

3. Dispositif selon la revendication 2, **caractérisé en ce que** l'angle formé par les deux parois (9, 10) de la rainure (4) est identique à celui formé par les deux parois (6, 7) de la nervure (5).

4. Dispositif selon la revendication 2, **caractérisé en ce que** l'angle formé par les deux parois (9, 10) de la rainure (4) a une valeur différente de celle de l'angle formé par les deux parois (6, 7) de la nervure (5).

5. Dispositif selon la revendication 1, **caractérisé en ce que** les moyens de retenue sont constitués par un retour coudé (12) ménagé sur l'extrémité de la jupe externe (10) de la rainure (4) de l'élément supérieur (1), ce retour s'étendant sensiblement dans le plan diamétral de l'élément supérieur et constituant, lors du raccordement, organe d'écartement de cette jupe (10).

6. Dispositif selon la revendication 1, **caractérisé en ce que** le fond de la rainure (4) contient un joint compressible et d'étanchéité (13).

7. Dispositif selon l'une quelconque des revendications 1 à 6, **caractérisé en ce que,** au moins l'un des deux éléments, respectivement, supérieur (A) et inférieur (B), est monolithique avec le tronçon de tube (2 ou 3) dont il doit assurer le raccordement.

8. Dispositif selon l'une quelconque des revendications 1 à 6, **caractérisé en ce que,** au moins l'un des éléments, respectivement supérieur (A) et inférieur (B), est rapporté et fixé sur le tronçon de tube (2 ou 3) dont il doit assurer le raccordement.

9. Dispositif selon les revendications 1 et 8, **caractérisé en ce que** chaque élément (A ou B) de raccordement est solidaire d'une virole 16a, 16b qui est munie, à son extrémité opposée à celle portant les moyens de raccordement, d'une partie conique divergeante (17) apte à coopérer avec un manchon tronconique (18) de coincement.

10. Dispositif selon les revendications 1 et 8, **caractérisé en ce que** l'extrémité inférieure de la jupe (7) de l'élément inférieur (B) est muni d'un retour coudé (22) dirigé vers l'intérieur et prolongé vers le bas par une gouttière concave (23) débouchant vers l'extérieur, cette gouttière étant apte à recevoir un organe circulaire (21) de désencliquetage et étant divisée en plusieurs tronçons par des fentes (24) s'étendant dans la jupe.

11. Tube raccordable de manière étanche **caractérisé en ce que** l'une de ses extrémités comporte en allant vers l'extérieur et à partir d'une partie cylindrique (2, 16a), une nervure tronconique (11) divergeant vers l'autre extrémité et une rainure circulaire (4) entourant ladite nervure, ladite rainure (4) ayant une section transversale dégageante et une jupe externe (10), déformable élastiquement et munie de moyens de retenue (12).

12. Tube raccordable de manière étanche **caractérisé en ce que** l'une de ses extrémités comporte en allant vers l'extérieur et à partir d'une partie cylindrique (3, 16b), d'une part, une cuvette tronconique (6), et d'autre part, une jupe externe tronconique (7) divergeant vers l'autre extrémité et formant, avec la paroi de la cuvette (6), une nervure circulaire (5).
